# EUROPÄISCHE PATENTSCHRIFT

(11) **EP 2 721 784 B1**
(45) Veröffentlichungstag und Bekanntmachung des Hinweises auf die Patenterteilung: **17.01.2018**
(21) Anmeldenummer: 12759068.5
(22) Anmeldetag: 03.09.2012
(51) Int. Cl.: H04L 12/42, H04L 12/24, H04L 12/46, H04L 12/437, H04L 12/935

(54) **VERFAHREN ZUM BETREIBEN EINER NETZWERKANORDNUNG UND NETZWERKANORDNUNG**
METHOD OF OPERATION OF A NETWORK EQUIPMENT AND NETWORK EQUIPMENT
PROCÉDÉ DE FONCTIONNEMENT D' UN ÉQUIPEMENT DE RÉSEAU ET ÉQUIPEMENT DE RÉSEAU

(30) Priorität: 19.09.2011 DE 102011082965
(43) Veröffentlichungstag der Anmeldung: 23.04.2014
(73) Patentinhaber: Siemens Aktiengesellschaft, 80333 München (DE)
(72) Erfinder: ARMBRUSTER, Michael, 81825 München (DE); FIEGE, Ludger, 85567 Grafing (DE); RIEDL, Johannes, 84030 Ergolding (DE); SCHMID, Thomas, 72622 Nürtingen (DE); ZIRKLER, Andreas, 81671 München (DE)
(86) Internationale Anmeldenummer: PCT/EP2012/067121
(87) Internationale Veröffentlichungsnummer: WO 2013/041355

(56) Entgegenhaltungen:
- US-A1- 2008 095 047
- US-A1- 2009 122 695
- US-A1- 2010 020 809

## Beschreibung

Die vorliegende Erfindung betrifft ein Verfahren zum Betreiben einer Netzwerkanordnung, sowie eine Netzwerkanordnung, welche mit dem vorgeschlagenen Verfahren arbeitet. Das Verfahren zum Betreiben kann insbesondere in einer Ethernet-Umgebung zum Einsatz kommen.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, bei denen elektromotorisch über eine Netzwerkkopplung von Sensor-, Steuer- und Aktoreinrichtungen die Lenkradstellung in Radpositionen umgesetzt wird.

Dabei sollen häufig über ein paketbasiertes Kommunikationsnetzwerk Daten derart ausgetauscht werden, dass im Falle eines einfachen Fehlers im Kommunikationsnetz die Daten ohne Informationsverlust ankommen. Beispielsweise können Daten mehrfach von einem Quell- zu einem Zielknoten geschickt werden, damit auch bei einer Netzwerkstörung zuverlässig die Daten erhalten werden können. Für Ethernet-Anwendungen ist beispielsweise das HASR-Protokoll (High Availability Seamless Redundancy) bekannt. HASR erfordert aber eine Ringstruktur des Netzwerkes, was grundsätzlich für Ethernet-Netze problematisch ist. Das ebenfalls bekannte Protokoll PRP (Parallel Redundancy Protocol) erfordert zwei parallele Netzwerke.

Insbesondere bei Netzwerken, die auf dem Ethernet-Standard basieren, sind Ringstrukturen nur mit hohem Aufwand implementierbar. In der US 2010/0020809 A1 ist ein Verfahren angegeben, bei dem ein VLAN in einem Ethernet-Netzwerk als Ringstruktur organisiert ist. Dabei ist jedem Knoten ein Switch zugeordnet, der an geeigneter Stelle und Betriebssituation den Ring unterbricht.

Die US 2009/122695 A1 offenbart ein Verfahren für eine redundante Ring-Kommunikation mit mehreren Kommunikationsmodulen. Jedes Kommunikationsmodul hat ein Paar Ring-Kanal-Ports für einen Ring-konfigurierten Kanal in einem Netzwerk, einen peripheren Geräte-Port für periphere Geräte-Daten und Dual-Ring-Ports für einen Inter-Ring-Kanal für ein jeweiliges Paar von Modulen. Die ersten und zweiten einer Menge von Kommunikationsmodulen senden duplizierte Datenpakete auf ihren jeweiligen ersten und zweiten Ringen. Antwortend auf nacheinander innerhalb eines vorgegebenen Zeitintervalls über die Ringe bei ersten und zweiten Modulen einer nächsten Menge eintreffende Datenpakete übermittelt jedes der nächsten Module sein über den jeweiligen Ring-Kanal empfangenes Datenpaket über einen Downstream-Ring-Kanal-Port.

Die US 2008/095047 A1 offenbart ein Verfahren zum Zurückschleifen von Traffic in QIQ-Ethernetringen und 1:1-geschützten PBT-Trunks. Ein robuster virtueller Ethernet-Ring hat Knoten, die durch Arbeits- und Schutzpfade miteinander verbunden sind. Wenn ein Bereich ausfällt, werden sofort die direkten zwei Nachbarknoten des Ausfalls verbunden, um den Ring zu schließen. Traffic des Arbeitspfades wird mit dem Schutzpfad am ersten der beiden Knoten verbunden und wird dann am zweiten Knoten der beiden Knoten auf den Arbeitspfad zurückverbunden, so dass Traffic jederzeit über den Arbeitspfad in den Ring ein- und austritt. Ein Ursprungsknoten des Verkehrs ist dazu eingerichtet, die Übertragung von Datenpaketen von einem ersten Pfad auf einen zweiten Pfad umzuschalten, sobald erkannt wird, dass übertragene Pakete aufgrund eines Fehlers auf dem ersten Pfad zurückgeschleift werden.

Es ist wünschenswert, insbesondere auf einer Ethernet-Struktur aufbauende Datenkommunikation zu betreiben, die einen erhöhten Fehlerschutz hat. Dies erfordert in der Regel, dass zwei disjunkte Kommunikationspfade von einer Datenquelle zu einem Zielknoten realisiert sind.

Es ist daher eine Aufgabe der vorliegenden Erfindung, ein verbessertes Verfahren und/oder eine Netzwerkanordnung bereitzustellen.

Demgemäß wird ein Verfahren zum Betreiben einer Netzwerkanordnung mit mehreren in einer Ringstruktur aneinander gekoppelten Netzwerkeinrichtungen gemäß Anspruch 1 vorgeschlagen.

Dabei wird unter dem "einen VLAN" ein erstes VLAN verstanden und unter dem "anderen VLAN" ein zweites unabhängig von dem ersten VLAN implementiertes VLAN. Die VLANs sind in derselben Netzwerkinfrastruktur implementiert. Ein VLAN trennt physische Netze in logische Teilnetze auf, die im Wesentlichen unabhängig voneinander agieren.

Die Netzwerkeinrichtungen können auch als Netzwerkknoten, Teilnehmer in einem Netzwerk oder auch als Steuerungskomponenten bezeichnet werden.

Durch das gleichzeitige Bereitstellen von mehreren VLANs können Daten redundant und gleichzeitig über die Netzwerk-Infrastruktur versendet und empfangen werden. Dadurch wird ein verbesserter Fehlerschutz erreicht. Viele Netzwerk-Protokolle wie das Ethernet verbieten die Ausführung von Ringstrukturen, da konventioneller Weise der Ringschluss ein Zusammenbruch des Netzwerkes nach sich ziehen kann, weil Datenpakete unendlich oft im Kreis verlaufen können. Deshalb ist vorgesehen, dass bestimmte Ports der Switch-Einrichtungen für das eine oder andere VLAN deaktiviert sind. Insofern erhält man, beispielsweise zwei ineinander greifende Ringstrukturen, welche von einer sendenden Netzwerkeinrichtung bzw. ein Port der zugehörigen Switch-Einrichtung terminiert wird.

Durch das Deaktivieren bestimmter Ports wird verhindert, dass Datenpakete in der Ringstruktur ständig weitergeleitet werden und zu einem ungewollten Ringschluss des Netzes führen können. Insofern wird der ringförmige Kommunikationspfad durch eine sendende Netzwerkeinrichtung unterbrochen. Durch das Bereitstellen von zwei VLANs ist auch im Einfach-Fehlerfall immer eines der VLANs unbeschädigt, so dass zuverlässig Daten übermittelt werden können.

Doppelt empfangene Daten, beispielsweise über die verschiedenen VLANs eintreffende Daten, können am Zielknoten oder der Ziel-Netzwerkeinrichtung über bekannte Verfahren aussortiert werden. Beispielsweise eignen sich Verfahrensaspekte des PRP oder HASR Protokolls dafür.

Weiterhin wird eine redundante Öffnung des jeweiligen VLAN-Rings erzielt. Beispielsweise kann bei einem Fehler in Forward-Tabellen eines jeweiligen Switches die Situation eintreten, dass ein unbeabsichtigter Ringschluss im VLAN entsteht, wodurch das Netz zusammenbrechen kann. Durch die zusätzliche Deaktivierung eines weiteren (benachbarten) Ports in dem Kommunikationspfad der Ringstruktur wird dies praktisch verhindert.

Bei einer Variante des Verfahrens umfasst dasselbe ferner: Versenden des Datenpakets von der Steuereinrichtung der ausgewählten Netzwerkeinrichtung über den anderen Port der Switch-Einrichtung in das andere der zwei VLANs; und

Deaktivieren des einen Ports der Switch-Einrichtung der ausgewählten Netzwerkeinrichtung für das andere VLAN, insbesondere zum Empfangen oder Senden. Das Paket wird gleichzeitig in die zwei VLANs gesendet. Beim Versenden des Datenpakets kann dies insbesondere mit Hilfe einer Unicast-Adresse, einer Multicast-Adresse oder einer Broadcast-Adresse erfolgen.

In Ausführungsformen des Verfahrens umfasst dasselbe ferner:
Vergleichen der Datenpakete, welche über das erste VLAN empfangen wurden, mit den Datenpaketen, welche über das zweite empfangen wurden. Insofern kann an jedem Netzwerkknoten oder Netzwerkeinrichtung eine Konsistenzprüfung der über die verschiedenen VLANs empfangenen Datenpakete durchgeführt werden.

Bei dem Verfahren sind vorzugsweise für ein jeweiliges VLAN alle Ports der Switch-Einrichtungen in der Netzwerkanordnung aktiviert mit Ausnahme desjenigen Ports einer Switch-Einrichtung einer sendenden Netzwerkeinrichtung von dem das Datenpaket nicht gesendet wird. Bei jeweils zwei Ports pro Switch-Einrichtung, die an die Kommunikationspfade koppeln, unterbricht insofern der jeweils andere nicht sendende Port den Ring des VLANs, in den die Daten abgesetzt werden.

Es wird ferner eine Netzwerkanordnung mit in einer Ringstruktur aneinander gekoppelte Netzwerkeinrichtung gemäß Anspruch 10 vorgeschlagen.

Dabei sind vorzugsweise die Netzwerkeinrichtungen derart eingerichtet, ein Verfahren, wie es zuvor beschrieben ist, durchzuführen.

Bei einer Ausführungsform der Netzwerkanordnung umfasst mindestens eine Netzwerkeinrichtung eine erste und zweite Switch-Einrichtung, wobei die erste Switch-Einrichtung der ersten Steuereinrichtung zugeordnet ist und die zweite Switch-Einrichtung einer zweiten Steuereinrichtung. Die Switch-Einrichtungen umfassen dabei jeweils mindestens zwei Ports und sind kommunikativ miteinander gekoppelt.

Dadurch lässt sich eine weitere Redundanz erzielen, so dass Steuereinrichtungen, wie beispielsweise eine CPU, ein Mikroprozessor oder andere programmierbare Schaltkreise, besonders sicherheitsrelevante Aufgaben erfüllen können. Die redundante Ausführung ermöglicht darüber hinaus, über mehrere VLANs konsistente Daten zu verschicken und im Netzwerk bereitzustellen.

Weitere Ausführungsformen der Netzwerkanordnung sehen vor, dass mindestens eine erste und eine zweite Ringstruktur ausgebildet ist, wobei die Ringstrukturen mit Hilfe einer oder mehrerer Kopplungs-Switch-Einrichtungen gekoppelt sind. Beispielsweise können die Ringstrukturen derart durch die Kopplungs-Switch-Einrichtungen gekoppelt sein, dass Ports der Kopplungs-Switch-Einrichtungen jeweils ausschließlich für eines der VLANs aktiviert sind. Insofern erfolgt auch eine Trennung oder Auftrennung des benutzten VLANs durch die Kopplungs-Switch-Einrichtung. Dabei können die beiden Ringstrukturen zwei separate physikalische Leitungen haben.

Die Netzwerkanordnung kann insbesondere Teil eines Fahrzeugs sein. Denkbar sind aber auch andere Einsatzgebiete wie Automatisierungsnetze.

Die Netzwerkeinrichtungen sind zum Beispiel jeweils als einzelner FPGA, ASIC, IC Chip, oder fest verdrahteter Mikroschaltkreis ausgeführt.

Weiterhin wird ein Computerprogrammprodukt gemäß Anspruch 8 und ein Datenträger gemäß Anspruch 9 vorgeschlagen. Die abhängigen Ansprüche definieren entsprechende Ausführungsbeispiele.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordndung, der Netzwerkeinrichtung oder eines Netzwerkknotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer ersten Ausführungsform einer Netzwerkanordnung;
- Fig. 2: eine schematische Darstellung einer zweiten Ausführungsform einer Netzwerkanordnung;
- Fig. 3: eine schematische Darstellung einer dritten Ausführungsform einer Netzwerkanordnung;
- Fig. 4,5: schematische Darstellungen einer vierten Ausführungsform der Netzwerkanordnung mit zwei Ringstrukturen und Kommunikationsabläufen zur Erläuterung von Verfahrensaspekten zum betreiben des Netzwerks; und
- Fig. 6,7: schematische Darstellungen einer fünften Ausführungsform der Netzwerkanordnung mit zwei Ringstrukturen und Kommunikationsabläufen zur Erläuterung von Verfahrensaspekten zum betreiben des Netzwerks.

In den Figuren sind gleiche oder funktionsgleiche Elemente mit denselben Bezugszeichen versehen worden, sofern nichts anderes angegeben ist.

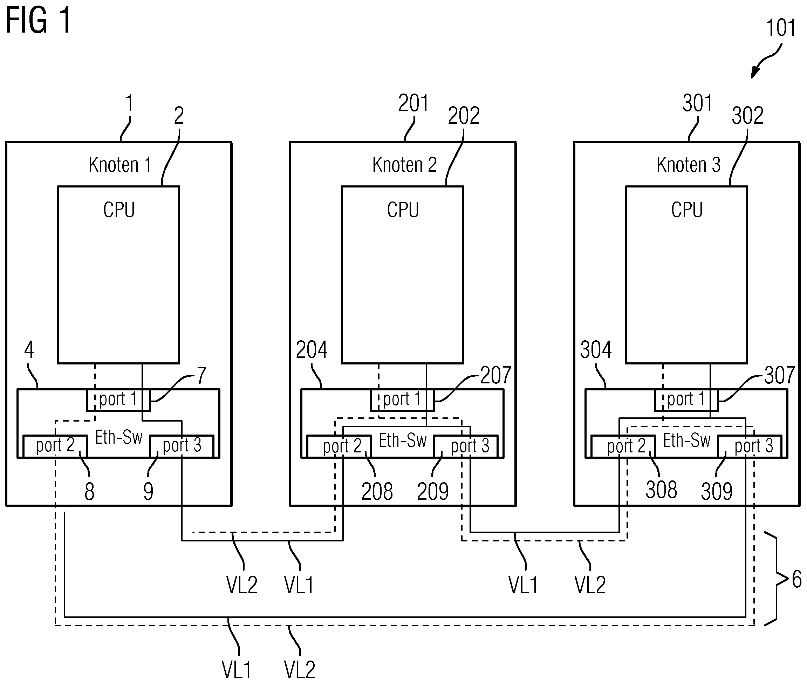

Die Fig. 1 zeigt eine schematische Darstellung einer ersten Ausführungsform einer Netzwerkanordnung. Die Netzwerkanordnung kann beispielsweise in eine Ethernet-Struktur eingebettet sein und mehrere Netzwerkeinrichtungen umfassen, die auch Netzwerkknoten, Netzwerk-Teilnehmer oder als Steuerungskomponenten bezeichnet werden können. Es sind auch Bezeichnungen wie Netzwerkelemente oder Netzwerk-Komponenten gängig.

In der Fig. 1 sind in der Netzwerkanordnung 101 drei Netzwerkeinrichtungen 1, 201, 301 angedeutet. Eine jeweilige Netzwerkeinrichtung 1, die als "Knoten 1", "Knoten 2" und "Knoten 3" beschriftet sind, umfasst jeweils eine Steuereinrichtung 2, 202, 302, die beispielsweise als Mikroprozessor oder CPU ausgestaltet sein kann. Die Steuereinrichtung 2, 202, 302 kann in dem Netzwerk bestimmte Funktionen vollziehen. Dabei sind Funktionen als Aktor oder Sensormessungen denkbar.

Der jeweiligen CPU 2, 202, 302 ist eine Switch-Einrichtung 4, 204, 304 zugeordnet. Die Switch-Einrichtung 4, 204, 304 umfasst einen ersten Port 7, 207, 307, der kommunikativ mit der jeweiligen CPU 2, 202, 302 verbunden ist. Darüber hinaus hat jede Switch-Einrichtung 4, 204, 304, die beispielsweise als interner Ethernet-Switch ausgeführt ist, zwei weitere Ports 8, 9, 208, 209, 308, 309 zum Ankoppeln an ein Kommunikationsnetzwerk 6, welches die Datenleitungen und damit Kommunikationspfade für zwischen den Netzwerkeinrichtungen 1, 201, 301 ausgetauschten Datenpaketen bereitstellt.

Die Netzwerkanordnung 101 wird betrieben, indem zwei VLAN-Netze VL1, VL2 bereitgestellt werden. Die Netzwerkeinrichtungen 1, 201, 301 sind in einer Ringstruktur angeordnet. Das heißt, zwischen der Netzwerkeinrichtung 1 und 201 ist eine kommunikative Verbindung, beispielsweise in der Art eines Kabels oder eines anderen Netzwerk-Links vorgesehen. Ferner ist die Netzwerkeinrichtung 201 mit der Netzwerkeinrichtung 301 kommunikativ gekoppelt, und die Netzwerkeinrichtung 301 ist mit der Netzwerkeinrichtung 1 gekoppelt. Dies ermöglicht eine Ringstruktur für die VLANs VL1, VL2.

Damit insbesondere bei der Ausgestaltung als Ethernet keine Belastung des Netzwerkes durch im Kreis laufender Datenpakete auftritt, werden bestimmte Ports der Switch-Einrichtungen 4, 204, 304 für die einzelnen VLANs VL1, VL2 blockiert oder deaktiviert. Der VLAN-Ring VL1 wird realisiert durch potenzielle Datenpfade zwischen dem Port 9 der ersten Switch-Einrichtung 4, den Ports 208, 209 der zweiten Switch-Einrichtung 204, den Ports 308, 309 der dritten Switch-Einrichtung 304 und (jedoch deaktiviert) dem Port 8 der ersten Switch-Einrichtung 4.

Alternativ ist es auch möglich anstelle einer PortDeaktivierung lediglich die Weiterleitung der entsprechenden Datenpakete zu unterbinden. Zum Beispiel ist es möglich, am Port 9 vorliegende Datenpakete des VLANS VL2 zwar der CPU 2 bereitzustellen, nicht jedoch am Port 8 bereitzuhalten. Ähnlich können die Switch-/Steuereinrichtungskombinationen 202, 204 und 302, 304 eingerichtet werden. Man kann auch davon sprechen, dass die Datenpakete des einen VLANs VL2 gefiltert werden.

In der Darstellung der Fig. 1 ist die Netzwerkeinrichtung 1 eine sendende Netzwerkeinrichtung, liefert also Daten an die übrigen im Netzwerk vorhandenen Knoten 201, 301. Das zweite VLAN VL2 ist in der Art eines Rings durch einen Kommunikationspfad zwischen dem Port 8 der ersten Switch-Einrichtung 4, dem Port 309 der dritten Switch-Einrichtung 304, dem Port 308 der dritten Switch-Einrichtung 304 und dem Port 209 der zweiten Switch-Einrichtung 204 sowie zwischen dem Port 208 der zweiten Switch-Einrichtung 204 und dem (für das VLAN VL2 deaktivierten) Port 9 der ersten Switch-Einrichtung 4.

Man erkennt, dass bei der sendenden Netzwerkeinrichtung 1, also wenn die CPU 2 Daten über den Port 7 an die Switch-Einrichtung 4 übergibt, die Daten einerseits über das VLAN VL1 und andererseits über das VLAN VL2 übertragen werden. Dabei ist der erste Port 8 für das VLAN VL2 aktiviert, wohingegen der jeweils andere Port 9 für das VLAN VL2 deaktiviert ist. Umgekehrt ist der Port 9 für das VLAN VL1 aktiviert und der andere Port 8 für das VLAN VL1 deaktiviert. Somit unterbricht der jeweils deaktivierte Port einen ungewollten Ringschluss im VLAN. Insofern sind bei einem VLAN alle Ports aktiviert, außer dem nicht sendenden Port des Quellknotens, welcher in der Fig. 1 die Netzwerkeinrichtung 1 ist.

Zum Senden können Broadcast- oder Multicast-Zieladressen verwendet werden, so dass in dem Ringnetzwerk alle übrigen Knoten oder Netzwerkeinrichtungen 201, 301 die Daten empfangen. Denkbar sind auch Unicast-Adressen, um einzelne Steuereinrichtungen zu erreichen.

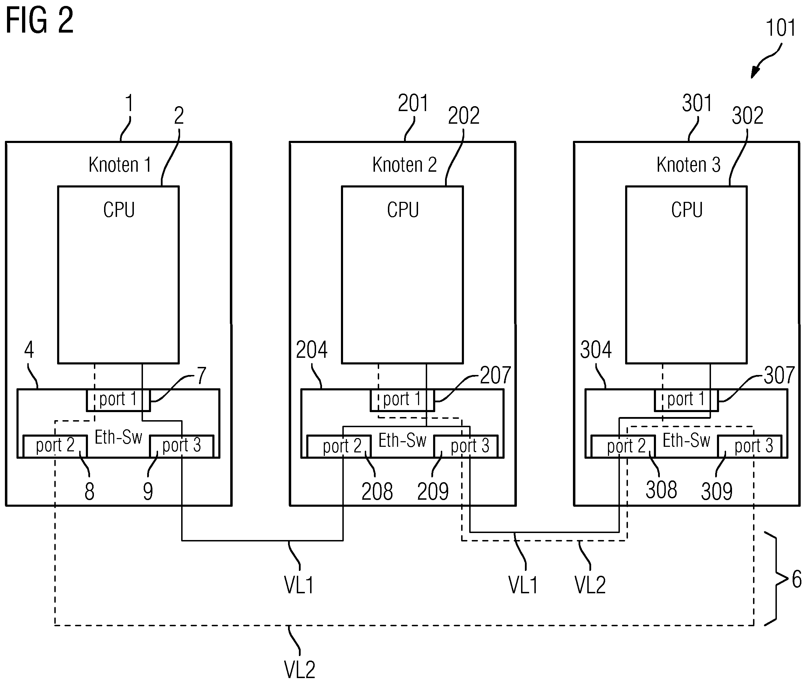

In der Fig. 2 ist eine Erweiterung des Verfahrens zum Betreiben einer Netzwerkanordnung mit einer Ringstruktur erläutert. Die Fig. 2 zeigt im Wesentlichen dieselben Elemente, wie sie in der Fig. 1 beschrieben sind und zeigt zwei bereitgestellte VLAN-Ringe VL1 und VL2.

Um den Schutz vor einem ungewollten Ringschluss im jeweiligen VLAN weiter zu verbessern, sind die Netzwerkeinrichtungen 1, 201, 301 mit ihren Switch-Einrichtungen 4, 204, 304 derart konfiguriert, dass auch benachbarte Ports unterschiedlicher Netzwerkeinrichtungen 1, 201, 301 eine Weiterleitung von Datenpaketen in einem jeweiligen VLAN, die zu einem Schließen des Rings führen könnten, unterbunden sind.

Man erkennt beispielsweise hinsichtlich des bereitgestellten VLANs VL1, dass von der sendenden Netzwerkeinrichtung 1 bzw. dem Knoten 1 aus, der nicht zum Senden verwendete Port 8 für das VLAN VL1 deaktiviert ist. Dies entspricht der Situation, wie sie in der Fig. 1 ebenfalls dargestellt war. Außerdem ist derjenige Port 309 in einer im Ring benachbarten Netzwerkeinrichtung 301 deaktiviert, der über den für das andere VLAN VL2 aktivierten Port 8 direkt verbunden ist. Insofern sind sowohl der Port 8 der sendenden Netzwerkeinrichtung 1 wie auch der Port 309 der von dem anderen VLAN VL2 empfangenden Netzwerkeinrichtung 301 deaktiviert. Man hat sozusagen zwei Ports, nämlich die Ports 8 und 309, welche einen Ringschlussschutz darstellen. Selbst bei einem Fehler in der Forwarding-Tabelle eines der Switches 4 oder 304 erfolgt somit kein Ringschluss, der zu einem Zusammenbruch des Ethernets führen kann. Analog ist der Port 9 und 208 für das VLAN VL2 gesperrt bzw. deaktiviert.

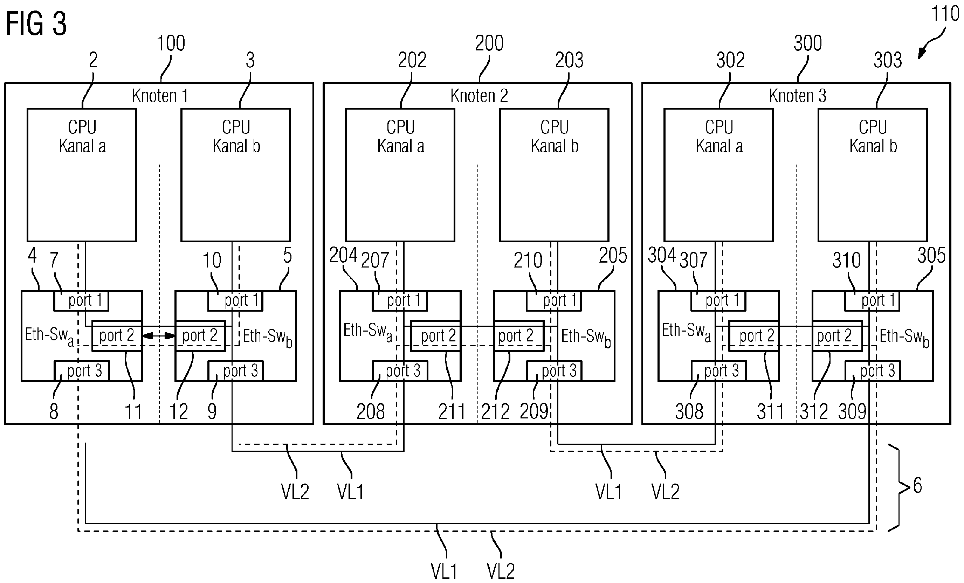

Die Fig. 3 zeigt eine weitere Ausführungsform einer Netzwerkanordnung 110. Dabei sind die eingesetzten Netzwerkeinrichtungen 100, 200, 300 redundant mit jeweils zwei CPUs 2, 3, 202, 203, 302, 303 und zugeordneten Switch-Einrichtungen 4, 5, 204, 205, 304, 305 ausgestattet. Die Switch-Einrichtungen eines Netzwerkknotens sind jeweils miteinander kommunikativ gekoppelt. In dem Netzwerkknoten 100 ist die Switch-Einrichtung 4 mit der Switch-Einrichtung 5 intern über Ports 11, 12 gekoppelt. Die Switch-Einrichtung 204, 205 des zweiten Knotens 200 sind ebenfalls über Ports 211, 212 intern miteinander gekoppelt. Ähnlich sind die Switch-Einrichtungen 304, 305 des dritten Knotens 300 miteinander über die Ports 311, 312 gekoppelt.

Durch das redundante Vorliegen der CPUs 2, 3, 202, 203, 302, 303 ist es möglich, die Funktionalität der Netzwerkeinrichtungen 100, 200, 300 redundant vorzuhalten, so dass beim Ausfall einer der CPUs noch immer zuverlässige Daten erzeugt werden können. Außerdem wird durch das redundante und getrennte Realisieren der Switch-Einrichtungen 4, 5, 204, 205, 304, 305 eine weitere Sicherheit erzielt. Die Realisierung der VLANs VL1, VL2 erfolgt, wie hinsichtlich der Fig. 1 beschrieben wurde. Allerdings erhalten die jeweiligen CPUs 2, 3, 202, 203, 302, 303 die über die VLANs versendeten Daten redundant, so dass intern ein Konsistenzcheck erfolgen kann.

Üblicherweise werden die Daten der redundanten CPUs, die mit "Kanal a" und "Kanal b" bezeichnet sind, über eine Kodierung miteinander verknüpft. Beispielsweise können von der CPU 2 Daten erzeugt werden, die durch eine Bit-Inversion der Daten von CPU 3 entsprechen, erzeugt werden. An anderer Stelle im Netzwerk können dann die jeweiligen Daten aus den Kanälen A und B verglichen werden, und es kann auf Fehler bei der Datenübertragung geschlossen werden, oder Ausfälle von Netzwerkeinrichtungen können bestimmt werden.

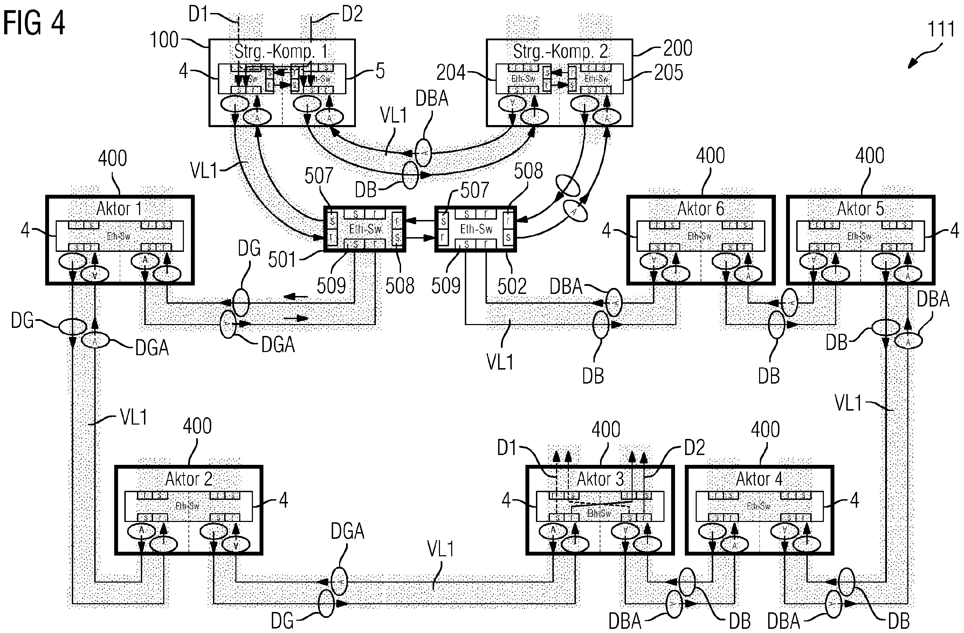

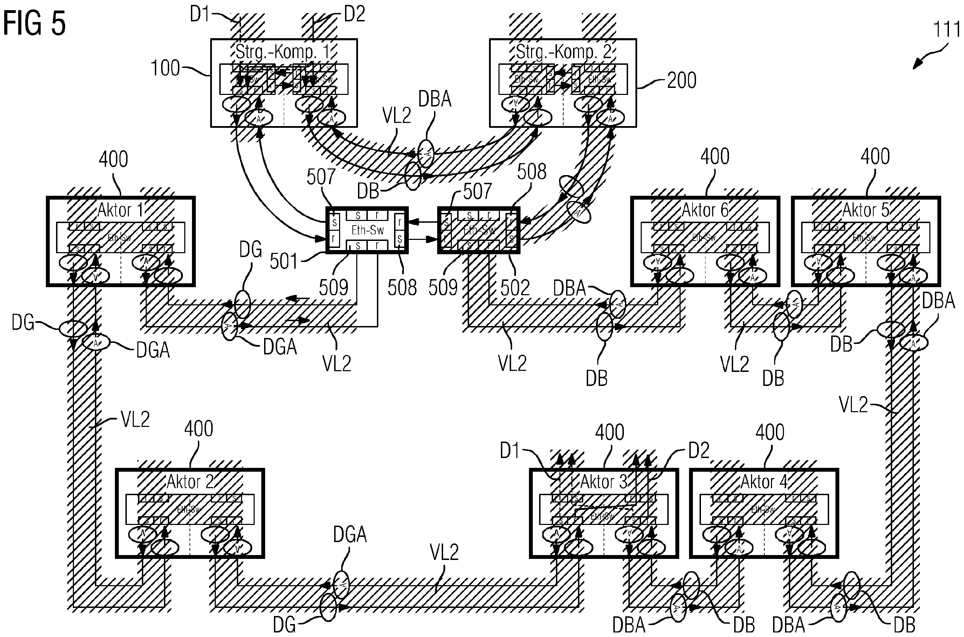

Die Fig. 4 und 5 zeigen eine vierte Ausführungsform einer Netzwerkanordnung 101. Beispielsweise kann die Netzwerkanordnung 111 Teil eines Kraftfahrzeuges sein, bei der Steuerkomponenten und verschiedene Aktoren, also Stellelemente als Netzwerkeinrichtungen ausgestaltet sind.

In den Fig. 4 und 5 sind dazu zwei Ringstrukturen ausgebildet, die über zentrale Ethernet-Switches 501, 502 miteinander gekoppelt sind. Dabei sind zwei Steuerungskomponenten oder Netzwerkeinrichtungen 100, 200 mit den beiden Ethernet-Switches 501, 502 in einem Ring miteinander gekoppelt.

Ein weiterer zweiter Ring wird durch Netzwerkeinrichtungen 400 gebildet, die mit "Aktor 1" bis "Aktor 6" bezeichnet sind. Die Aktoreinrichtungen 400 haben jeweils einen Ethernet-Switch 4 und sind im Wesentlichen wie die in der Fig. 1 dargestellte Netzwerkeinrichtung 1 aufgebaut. In den Aktoreinrichtungen 400 sind keine CPUs dargestellt. Die Netzwerkanordnung 111 basiert auf einem Ethernet-Protokoll. Das heißt, es sind bidirektionale oder Duplexverbindungen möglich. Das bedeutet, dass eine Datenkommunikation in zwei Richtungen erfolgen kann.

Gepunktet unterlegt ist die Bereitstellung eines ersten virtuellen LANs VL1 zum Senden von Daten von der Steuerungskomponente 100 an die Aktorkomponente 400, die mit "Aktor 3" bezeichnet ist. Die jeweilige Kommunikationsrichtung ist durch die Pfeile zwischen den Netzwerkkomponenten 100, 200, 400, 500 angedeutet. Dabei entsprechen die Datenpakete DG denjenigen, die über den linken Zweig, also von der Steuerungskomponente 100 über die Switch-Einrichtung 501 und die Aktoreinrichtungen 400, welche mit "Aktor 1" und "Aktor 2" bezeichnet sind, laufen. Die Datenpakete DGA sind rücklaufende Datenpakete.

Ein rechter Zweig mit Datenpakete DB bzw. DBA verläuft von der Steuerungskomponente 100 zur Steuerungskomponente 200 über die Switch-Einrichtung 502 und die mit "Aktor 4" bis "Aktor 6" bezeichneten Netzwerkeinrichtungen 400.

Beim Versand der Daten von der Steuerungskomponente 1, 100 über das VLAN VL1, wird ein unerwünschter Ringschluss für das VLAN VL1 durch eine Deaktivierung der Ports 509, 507 und 508 der Switch-Einrichtung 502 für Daten des VL1 erzielt.

In der Fig. 5 ist die Betriebssituation des Netzwerkes mit dem zweiten VLAN VL2 dargestellt. Dabei sind die Netzwerkpfade schraffiert unterlegt angedeutet. Für das VLAN VL2 ist die erste Ethernet-Switch-Einrichtung 501 bzw. deren Ports 507, 508, 509 deaktiviert. Das heißt, es kann keine Netzwerküberbelastung auftreten, die durch im Kreis laufenden Datenpakete erfolgt. Die in den Figuren 4 - 7 mit einzelnen Bezugszeichen versehenen Ports sind Kombination von Sende- und Empfangsports. Anhand der Pfeile, welche eine Datenrichtung angeben, und der Symbole "s" bzw. "r" ergibt sich jeweils, welcher Port angesprochen oder deaktiviert ist. Zum Beispiel ist in Figur 4 der Sendeport "s" der Portkombination 509 der Switch-Einrichtung 508 für das VLAN VL1 deaktiviert.

Die beiden VLANs VL1, wie es in der Fig. 4 angedeutet ist, und VL2, wie in der Fig. 5 angedeutet ist, werden gleichzeitig betrieben, so dass Daten gleichzeitig von der Steuerungskomponente 1, 100 an die zu steuernde Aktorkomponente Aktor 3, 400 erfolgt. Selbst wenn Datenpakete, welche über ein erstes VLAN VL1 übertragen werden, gestört werden, erhält die Aktorkomponente 3, 400 trotzdem zuverlässig Daten über das zweite VLAN VL2.

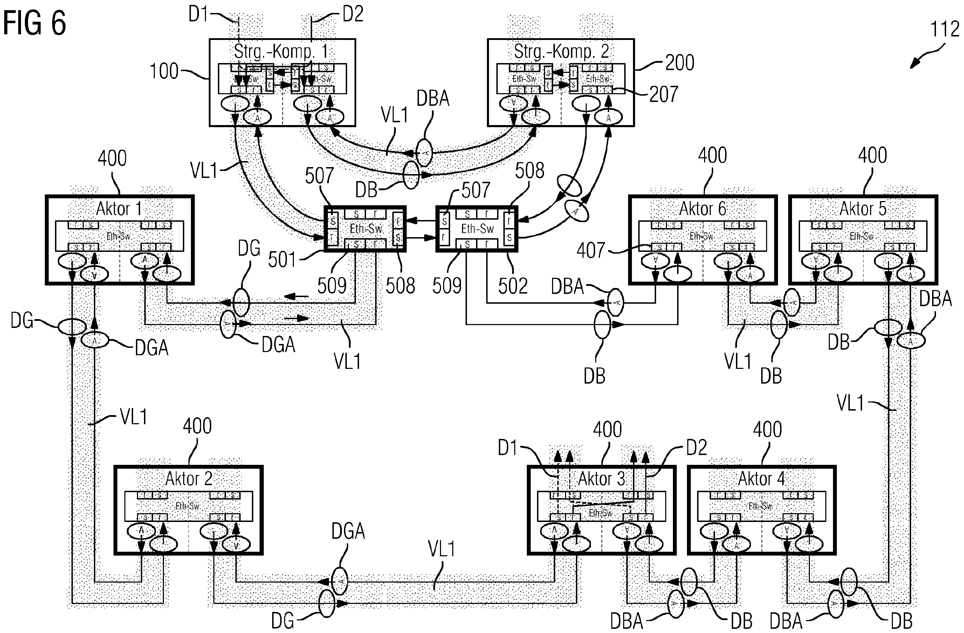

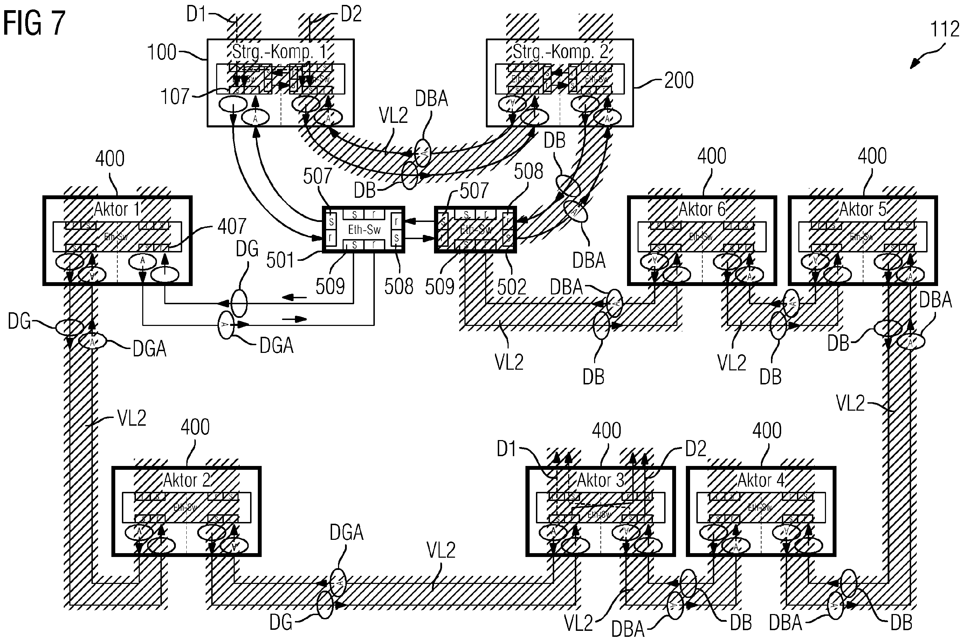

Um das Risiko eines ungewollten Ringschlusses eines der beiden VLANs weiter zu minimieren, können zusätzliche Ports an Steuerungskomponenten oder Netzwerkkomponenten in der Netzwerkanordnung blockiert oder deaktiviert werden. Dies ist in den Fig. 6 und 7 näher erläutert. Die Fig. 6 und 7 zeigen eine Netzwerkanordnung 112, die im Wesentlichen dieselben Komponenten wie die Netzwerkanordnung 111 aus den Fig. 4 und 5 aufweist. Es ist ebenfalls ein VLAN VL1 bereitgestellt (vgl. Fig. 6) und ein VLAN VL2 (vgl. Fig. 7). Das VLAN VL1 ist gepunktet unterlegt angedeutet und das VLAN VL2 schräg schraffiert.

Für den Betrieb des VLANs VL1 ist der Ethernet-Switch 502 bzw. dessen Ports 507, 508, 509 deaktiviert. Es erfolgt keine Weiterleitung von Datenpaketen, die dem VL1 entsprechen. Zusätzlich sind die Ports 207 der benachbarten Steuerungskomponente 2, 200 deaktiviert sowie die Ports 407, der ebenfalls in dem zweiten Ring benachbarten Aktorkomponente 6, 400. Insofern ist die Abgrenzung oder Terminierung des VLAN-Rings VL1 zusätzlich verbessert. Auch bei Fehlern in Forwarding-Tabellen, beispielsweise im Ethernet-Switch 502, stoppen die Ports 407 und 207 der Aktorkomponente 6, 400 sowie der Steuerungskomponente 2, 200, die entsprechenden Datenpakete.

Es ist ferner eine ähnliche Sicherungsmaßnahme für das zweite VLAN VL2 vorgesehen. Dies ist in der Fig. 7 angedeutet. Der Ethernet-Switch 501 bzw. dessen Ports 507, 508, 509 sind für das VLAN VL2 gesperrt. Außerdem sind die benachbarten Ports 207, 407 der Steuerungskomponente 1, 100 der oberen Ringstruktur und der Aktoreinrichtung 400 der unteren Ringstruktur deaktiviert. Insofern kann auch bei Fehlern in Forwarding-Tabellen des Ethernet-Switches 501 zuverlässig verhindert werden, dass Datenpakete des VLANs VL2 im Kreis verlaufen und damit die Netzwerk-Infrastruktur unnötig belasten.

Zusätzlich zu den angedeuteten Verfahren und Maßnahmen zum redundanten und zuverlässigen Versenden von Daten über VLANs können Abwandlungen eingesetzt werden. Beispielsweise kann zwischen Quell- und Zielknoten ein VLAN-Cross-Connect erfolgen (VLAN-XC) oder auch Verfahren wie Provider Backbound Bridging - Traffic Engineering (PBB-TE) eingesetzt werden. Bei den eingesetzten ringförmigen VLANs kann darüber hinaus PRP eingesetzt werden, da mehrere VLANs gleichzeitig bereitgestellt sind.

Obgleich in den Beispielen zwei voneinander getrennte VLANs VL1, VL2 angedeutet sind, ist es auch möglich, durch Ausweitung der Portdeaktivierung weitere VLANs vorzusehen. Durch die Implementierung von mehr als zwei VLANs wird eine weitere Verbesserung in der Kommunikationssicherheit erzielt.

Neben den angedeuteten zwei Ringstrukturen sind auch Ausführungsformen denkbar, die drei oder mehr Ringstrukturen aneinander gekoppelte Ringe haben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Netzwerkanordnung (101) mit mehreren in einer Ringstruktur aneinander gekoppelten Netzwerkeinrichtungen (1, 201, 301), wobei eine jeweilige Netzwerkeinrichtung (1) eine Steuereinrichtung (2) und eine Switch-Einrichtung (4) mit zwei Ports (8, 9) zum Ankoppeln an einen Kommunikationspfad aufweist, umfassend:
gleichzeitiges Bereitstellen von zwei VLANs (VL1, VL2) in der Ringstruktur;
Versenden eines Datenpakets von der Steuereinrichtung (2) einer Netzwerkeinrichtung (1) über einen Port (9) der Switch-Einrichtung (4) in eines der zwei VLANs (VL1),
wobei das Verfahren **dadurch gekennzeichnet ist, dass** es die folgenden Schritte umfasst:
das Datenpaket wird gleichzeitig in die zwei VLANs (VL1, VL2) gesendet; Deaktivieren des anderen Ports (8) der Switch-Einrichtung (4) der Netzwerkeinrichtung (1) für das eine VLAN (VL1); und
Deaktivieren für das eine VLAN (VL1) desjenigen Ports (309) einer Switch-Einrichtung (304) einer das Datenpaket über das eine VLAN (VL1) empfangenden Netzwerkeinrichtung (301), welcher mit dem anderen Port (8) der Switch-Einrichtung (4) der Netzwerkeinrichtung (1) über das andere der zwei VLANs (VL2) gekoppelt ist.

2. Verfahren nach Anspruch 1, ferner umfassend:
Versenden des Datenpakets von der Steuereinrichtung (2) der Netzwerkeinrichtung (1) über den anderen Port (8) der Switch-Einrichtung (4) in das andere der zwei VLANs (VL2); und
Deaktivieren des einen Ports (9) der Switch-Einrichtung (4) der Netzwerkeinrichtung (1) für das andere VLAN (VL2).

3. Verfahren nach -Anspruch 1 oder 2,
**dadurch gekennzeichnet,**
**dass** das Senden des Datenpaktes mittels einer Multicast-Adresse erfolgt.

4. Verfahren nach -Anspruch 1 oder 2,
**dadurch gekennzeichnet,**
**dass** das Senden des Datenpaktes mittels einer Broadcast-Adresse erfolgt.

5. Verfahren nach einem der Ansprüche 1 - 4, ferner umfassend:
Vergleichen der Datenpakete, welche über das erste VLAN (VL1) empfangen wurden, mit den Datenpaketen, welche über das zweite VLAN (VL2) empfangen wurden.

6. Verfahren nach einem der Ansprüche 1 - 5,
**dadurch gekennzeichnet,**
**dass** die Netzwerkeinrichtungen (1, 201, 301) eingerichtet sind, nach einem Ethernetprotokoll zu arbeiten.

7. Verfahren nach einem der Ansprüche 1 - 6,
**dadurch gekennzeichnet,**
**dass** für ein jeweiliges VLAN (VL1) alle Ports (9, 208, 209, 308, 309) der Switch-Einrichtungen (2, 202, 302) aktiviert sind mit Ausnahme des Ports (8) einer Switch-Einrichtung (4) einer Netzwerkeinrichtung (1) von dem das Datenpaket nicht gesendet wird.

8. Computerprogrammprodukt, welches die Durchführung eines Verfahrens nach einem der Ansprüche 1 - 7 auf einer programmgesteuerten Einrichtung (1, 201, 301) veranlasst.

9. Datenträger mit einem gespeicherten Computerprogramm mit Befehlen, welche die Durchführung eines Verfahrens nach einem der Ansprüche 1 - 7 auf einer programmgesteuerten Einrichtung (1, 201, 301) veranlasst.

10. Netzwerkanordnung (101) mit in einer Ringstruktur aneinander gekoppelten Netzwerkeinrichtungen (1, 201, 301),
wobei eine jeweilige Netzwerkeinrichtung (1) eine Steuereinrichtung und eine Switch-Einrichtung (4) mit zwei Ports (8, 9) zum Ankoppeln an einen Kommunikationspfad umfasst;
wobei die Netzwerkeinrichtungen (1, 201, 301) zum gleichzeitigen Bereitstellen von zwei VLANs (VL1, VL2) in der Ringstruktur eingerichtet sind; und wobei die Netzwerkanordnung **dadurch gekennzeichnet ist, dass**:
die Netzwerkeinrichtungen (1, 201, 301) derart eingerichtet sind, dass beim Versenden eines Datenpakets von der Steuereinrichtung (2) der Netzwerkeinrichtung (1) über einen Port (9) der Switch-Einrichtung (4) in eines der zwei VLANs (VL1) der andere Port (8) der Switch-Einrichtung (4) für das eine VLAN (VL1) deaktiviert ist, wobei das Datenpaket gleichzeitig in die zwei VLANs (VL1, VL2) gesendet wird, und dass für das eine VLAN (VL1) derjenige Port (309) einer Switch-Einrichtung (304) einer das Datenpaket über das eine VLAN (VL1) empfangenden Netzwerkeinrichtung (301), welcher mit dem anderen Port (8) der Switch-Einrichtung (4) der Netzwerkeinrichtung (1) über das andere der zwei VLANs (VL2) gekoppelt ist, deaktiviert ist.

11. Netzwerkanordnung (101) nach Anspruch 10,
**dadurch gekennzeichnet,**
**dass** die Netzwerkeinrichtungen (1, 201, 202) eingerichtet sind, eine Verfahren nach einem der Ansprüche 1 - 10 durchzuführen.

12. Netzwerkanordnung (101) nach Anspruch 10 oder 11, **dadurch gekennzeichnet,**
**dass** mindestens eine Netzwerkeinrichtung (100) eine erste und zweite Switch-Einrichtung (4, 5) umfasst, wobei die erste Switch-Einrichtung (4) der ersten Steuereinrichtung (2) zugeordnet ist und die zweite Switch-Einrichtung (5) einer zweiten Steuereinrichtung (3) zugeordnet ist, und wobei die Switch-Einrichtungen (4, 5) jeweils zwei Ports (7 - 12) umfassen und die Switch-Einrichtungen (4, 5) kommunikativ miteinander gekoppelt sind.

13. Netzwerkanordnung (111) nach einem der Ansprüche 10 - 12, **dadurch gekennzeichnet,**
**dass** die Netzwerkeinrichtungen (100, 200, 400) eine erste und eine zweite Ringstruktur ausbilden, wobei die Ringstrukturen mittels einer oder mehrerer Kopplungs-Switch-Einrichtungen (500) gekoppelt sind.

14. Netzwerkanordnung (111) nach Anspruch 13,
**dadurch gekennzeichnet,**
**dass** die Kopplungs-Switch-Einrichtungen (500) derart eingerichtet ist, dass Ports (507, 508, 509) der Kopplungs-Switch-Einrichtung (500) ausschließlich für eines der VLANs (VL1, VL2) aktiviert sind.

15. Netzwerkanordnung (1, 111) nach einem der Ansprüche 10 - 14,
**dadurch gekennzeichnet,**
**dass** die Netzwerkanordnung (1, 111) Teil eines Fahrzeugs ist.

## Claims

1. Method for operating a network arrangement (101) that comprises a plurality of network devices (1, 201, 301) coupled to one another in a ring topology, wherein each network device (1) has a control device (2) and a switch device (4) comprising two ports (8, 9) for coupling to a communications path, said method comprising:
simultaneously providing two VLANs (VL1, VL2) in the ring topology;
sending a data packet from the control device (2) of a network device (1) via a port (9) of the switch device (4) into one of the two VLANs (VL1), wherein the method is **characterized in that** it comprises the following steps:
the data packet is sent into the two VLANs (VL1, VL2) simultaneously;
disabling for the one VLAN (VL1) the other port (8) of the switch device (4) of the network device (1); and
disabling for the one VLAN (VL1) that port (309) that belongs to a switch device (304) of a network device (301) receiving the data packet via the one VLAN (VL1) and that is coupled via the other of the two VLANs (VL2) to the other port (8) of the switch device (4) of the network device (1).

2. Method according to Claim 1, further comprising:
sending the data packet from the control device (2) of the network device (1) via the other port (8) of the switch device (4) into the other of the two VLANs (VL2); and
disabling the one port (9) of the switch device (4) of the network device (1) for the other VLAN (VL2).

3. Method according to Claim 1 or 2,
**characterized in that**
the data packet is sent by means of a multicast address.

4. Method according to Claim 1 or 2,
**characterized in that**
the data packet is sent by means of a broadcast address.

5. Method according to any of Claims 1 to 4, further comprising:
comparing the data packets that were received via the first VLAN (VL1) with the data packets that were received via the second VLAN (VL2).

6. Method according to any of Claims 1 to 5,
**characterized in that**
the network devices (1, 201, 301) are configured to work in accordance with an Ethernet protocol.

7. Method according to any of Claims 1 to 6,
**characterized in that**
all the ports (9, 208, 209, 308, 309) of the switch devices (2, 202, 302) are enabled for a particular VLAN (VL1) except for the port (8) which belongs to a switch device (4) of a network device (1) and from which the data packet is not sent.

8. Computer program product that brings about the implementation of a method according to any of Claims 1 to 7 on a program-controlled device (1, 201, 301).

9. Data storage medium containing a stored computer program comprising commands that bring about the implementation of a method according to any of Claims 1 to 7 on a program-controlled device (1, 201, 301).

10. Network arrangement (101) that comprises network devices (1, 201, 301) coupled to one another in a ring topology,
wherein each network device (1) has a control device and a switch device (4) comprising two ports (8, 9) for coupling to a communications path;
wherein the network devices (1, 201, 301) are configured to provide simultaneously two VLANs (VL1, VL2) in the ring topology; and
wherein the network arrangement is **characterized in that**:
the network devices (1, 201, 301) are configured such that when a data packet is sent from the control device (2) of the network device (1) via a port (9) of the switch device (4) into one of the two VLANs (VL1), the other port (8) of the switch device (4) is disabled for the one VLAN (VL1), wherein the data packet is sent into the two VLANs (VL1, VL2) simultaneously, and that for the one VLAN (VL1) that port (309) that belongs to a switch device (304) of a network device (301) receiving the data packet via the one VLAN (VL1) and that is coupled to the other part (8) of the switch device (4) of the network device (1) via the other of the two VLANs (VL2) is disabled.

11. Network arrangement (101) according to Claim 10, **characterized in that**
the network devices (1, 201, 301) are configured to carry out a method according to any of Claims 1 to 10.

12. Network arrangement (101) according to Claim 10 or 11, **characterized in that**
at least one network device (100) comprises a first switch device and a second switch device (4, 5), wherein the first switch device (4) is assigned to the first control device (2), and the second switch device (5) is assigned to a second control device (3), and wherein the switch devices (4, 5) each comprise two ports (7-12), and the switch devices (4, 5) are communicatively coupled to one another.

13. Network arrangement (111) according to any of Claims 10 to 12,
**characterized in that**
the network devices (100, 200, 400) form a first ring topology and a second ring topology, wherein the ring topologies are coupled by means of one or more coupling-switch devices (500).

14. Network arrangement (111) according to Claim 13, **characterized in that**
the coupling-switch devices (500) are configured such that ports (507, 508, 509) of the coupling-switch device (500) are enabled solely for one of the VLANs (VL1, VL2).

15. Network arrangement (1, 111) according to any of Claims 10 to 14,
**characterized in that**
the network arrangement (1, 111) is part of a vehicle.

## Revendications

1. Procédé de fonctionnement d'un système de réseau (101) comportant plusieurs dispositifs de réseau (1, 201, 301) couplés les uns aux autres pour donner une structure annulaire, un dispositif de réseau respectif (1) comportant un dispositif de commande (2) et un dispositif de commutation (4) avec deux ports (8, 9) pour couplage à un chemin de communication, incluant :
la mise à disposition simultanée de deux VLAN (VL1, VL2) dans la structure annulaire ;
l'envoi d'un paquet de données du dispositif de commande (2) d'un dispositif de réseau (1) via un port (9) du dispositif de commutation (4) à l'un des deux VLAN (VL1), le procédé étant **caractérisé en ce qu'**il comprend les étapes suivantes :
le paquet de données est envoyé simultanément aux deux VLAN (VL1, VL2) ; ;
désactivation de l'autre port (8) du dispositif de commutation (4) du dispositif de réseau (1) pour l'un des VLAN (VL1) ; et
désactivation, pour l'un des VLAN (VL1), du port (309) d'un dispositif de commutation (304) d'un dispositif de réseau (301) recevant le paquet de données via l'un des VLAN (VL1), et qui est couplé à l'autre port (8) du dispositif de commutation (4) du dispositif de réseau (1) via l'autre des deux VLAN (VL2).

2. Procédé selon la revendication 1, incluant en outre :
l'envoi du paquet de données du dispositif de commande (2) du dispositif de réseau (1) via l'autre port (8) du dispositif de commutation (4) à l'autre des deux VLAN (VL2) ;
et
la désactivation de l'un des ports (9) du dispositif de commutation (4) du dispositif de réseau (1) pour l'autre VLAN (VL2).

3. Procédé selon la revendication 1 ou 2, **caractérisé en ce que** le paquet de données est envoyé au moyen d'une adresse multicast.

4. Procédé selon la revendication 1 ou 2, **caractérisé en ce que** le paquet de données est envoyé au moyen d'une adresse broadcast.

5. Procédé selon l'une des revendications 1 à 4, incluant en outre la comparaison des paquets de données reçus via le premier VLAN (VL1) avec les paquets de données reçus via le deuxième VLAN (VL2).

6. Procédé selon l'une des revendications 1 à 5, **caractérisé en ce que** les dispositifs de réseau (1, 201, 301) sont configurés pour fonctionner selon un protocole Ethernet.

7. Procédé selon l'une des revendications 1 à 6, **caractérisé en ce que**, pour un VLAN respectif (VL1), tous les ports (9, 208, 209, 308, 309) des dispositifs de commutation (2, 202, 302) sont activés à l'exception du port (8) d'un dispositif de commutation (4) d'un dispositif de réseau (1) par lequel le paquet de données n'est pas émis.

8. Produit de programme informatique qui fait exécuter un procédé selon l'une des revendications 1 à 7 sur un dispositif (1, 201, 301) commandé par programme.

9. Support de données avec un programme informatique stocké comportant des commandes qui font exécuter un procédé selon l'une des revendications 1 à 7 sur un dispositif (1, 201, 301) commandé par programme.

10. Système de réseau (101) comportant des dispositifs de réseau (1, 201, 301) couplés les uns aux autres pour donner une structure annulaire,
un dispositif de réseau respectif (1) comprenant un dispositif de commande et un dispositif de commutation (4) avec deux ports (8, 9) pour couplage à un chemin de communication ;
les dispositifs de réseau (1, 201, 301) étant configurés pour fournir en même temps deux VLAN (VL1, VL2) dans la structure annulaire ; et
le système de réseau étant **caractérisé en ce que** :
les dispositifs de réseau (1, 201, 301) sont configurés de telle sorte que, lors de l'envoi d'un paquet de données du dispositif de commande (2) du dispositif de réseau (1) via un port (9) du dispositif de commutation (4) à l'un des deux VLAN (VL1), l'autre port (8) du dispositif de commutation (4) est désactivé pour l'un des VLAN (VL1), le paquet de données étant envoyé simultanément aux deux VLAN (VL1, VL2) ; et
pour l'un des VLAN (VL1), le port (309) d'un dispositif de commutation (304) d'un dispositif de réseau (301) recevant le paquet de données via l'un des VLAN (VL1), et qui est couplé à l'autre port (8) du dispositif de commutation (4) du dispositif de réseau (1) via l'autre des deux VLAN (VL2), est désactivé.

11. Système de réseau (101) selon la revendication 10, **caractérisé en ce que** les dispositifs de réseau (1, 201, 202) sont configurés pour exécuter un procédé selon l'une des revendications 1 à 10.

12. Système de réseau (101) selon la revendication 10 ou 11, **caractérisé en ce qu'**au moins un dispositif de réseau (100) comprend un premier et un deuxième dispositif de commutation (4, 5), le premier dispositif de commutation (4) étant affecté au premier dispositif de commande (2) et le deuxième dispositif de commutation (5) étant affecté à un deuxième dispositif de commande (3), et les dispositifs de commutation (4, 5) comprenant respectivement deux ports (7 à 12) et les dispositifs de commutation (4, 5) étant couplés entre eux communicativement.

13. Système de réseau (111) selon l'une des revendications 10 à 12, **caractérisé en ce que** les dispositifs de réseau (100, 200, 400) forment une première et une deuxième structure annulaire, les structures annulaires étant couplées au moyen d'un ou de plusieurs dispositifs de commutation et de couplage (500).

14. Système de réseau (111) selon la revendication 13, **caractérisé en ce que** les dispositifs de commutation et de couplage (500) sont configurés de telle sorte que des ports (507, 508, 509) du dispositif de commutation et de couplage (500) sont activés exclusivement pour l'un des VLAN (VL1, VL2).

15. Système de réseau (1, 111) selon l'une des revendications 10 à 14, **caractérisé en ce que** le système de réseau (1, 111) est une partie d'un véhicule.
